(19) Europäisches Patentamt
European Patent Office
Office européen des brevets

(11) Publication number: 0 353 318 A1

# (12) EUROPEAN PATENT APPLICATION

(21) Application number: 88112456.4

(51) Int. Cl.4: C08F 210/08 , C08F 4/64

(22) Date of filing: 01.08.88

(43) Date of publication of application: 07.02.90 Bulletin 90/06

(84) Designated Contracting States: BE CH DE FR GB IT LI NL SE

(71) Applicant: IDEMITSU PETROCHEMICAL CO. LTD.
1-1, Marunouchi 3-chome Chiyoda-ku
Tokyo(JP)

Applicant: NESTE OY
Keilaniemi
SF-02150 Espoo(FI)

(72) Inventor: Yamawaki, Takashi Idemitsu Petrochemical Co. Ltd.
1-1, Anegasakikaigan
Ichihara-shi Chiba-ken(JP)
Inventor: Imabayashi, Hideki Idemitsu Petrochemical Co. Ltd.
1-1, Anegasakikaigan
Ichihara-shi Chiba-ken(JP)

(74) Representative: Patentanwälte TER MEER - MÜLLER - STEINMEISTER
Mauerkircherstrasse 45
D-8000 München 80(DE)

## (54) Butene-1 copolymer.

(57) A butene-1 copolymer being particularly excellent in workability and mechanical property containing ethylene units and butene-1 units within a molar ratio of from 1:99 to 15:85 in which the intrinsic viscosity for said copolymer is within a range of from 0.9 to 7.0 dl/g, the ratio of weight average molecular weight/number average molecular weight is within a range of from 4 to 15, the temperature difference between the highest value and the lowest value of the melting point of said copolymer measured by differential thermal scanning analysis is within a range of from 2°C or higher, the ethylene block property of said copolymer measured by NMR spectroscopy is not more than 0.015, and the content of the boiling diethyl ether soluble ingredient in said copolymer is within a range of from 3 to 25% by weight.

EP 0 353 318 A1

# Butene-1 copolymer

## BACKGROUND OF THE INVENTION

### (1) Field of the Invention

The present invention relates to a butene-1 copolymer. More specifically, the present invention relates to a butene-1 copolymer containing ethylene units and particularly excellent in workability and mechanical property.

### (2) Description of the Related Art

In recent years, butene-1 copolymers have been noted as a soft or semi-rigid resins.

Heretofore, such butene-1 copolymers have often been produced by a method of conducting solution polymerization or slurry polymerization using titanium trichloride as a catalyst, but butene-1 copolymers produced by this method are poor in random property and, molded films prepared therefrom show reduced transparency.

Furthermore, it has already been known a method of producing a butene-1 copolymer by a solution polymerization process using a magnesium chloride support type catalyst as a catalyst (Japanese Patent Laid-Open No. 61-108615).

However, the copolymer obtained by this method has characteristics that the distribution width of the molecular weight is narrow. It has been known that the distribution width of the molecular weight of the butene-1 copolymer gives an effect on the fabricability of the copolymer such molbability of the copolymer and the butene-1 copolymer obtained by the method as described above involves the problem that the fabricability upon extrusion molding is not sufficient due to the narrow distribution width of the molecular weight.

While on the other hand, it has already been known such a method of carrying out gas phase polymerization by using a titanium trichloride catalyst used so far (Japanese Patent Laid-Open No. 60-192716), but the thus obtained butene-1 copolymer has poor random property and, accordingly, the films molded therefrom involves the problem that the transparency is reduced as described above.

## SUMMARY OF THE INVENTION

The object of the present invention is to provide a butene-1 copolymer having preferable fabricability and mechanical property together.

More specifically, it is an object of the present invention to provide a butene-1 copolymer excellent in fabricability such as moldability, and transparency and appearance of the molding product, as well as excellent in mechanical property such as impact shock resistance.

The present invention for attaining the foregoing purpose provides a butene-1 copolymer containing ethylene units and butene-1 units within a molar ratio from 1 : 99 to 15 : 85, wherein the intrinsic viscosity of the copolymer is within a range from 0.9 to 7.0 dl/g, the weight average molecular weight/number average molecular weight is within a range from 4 to 15, the temperature difference between the highest value and the lowest value for the melting point of the copolymer measured by the differential thermal scanning analysis is not smaller than 2° C, the ethylene block property of the copolymer measured by NMR spectrum analysis is not greater than 0.015, and the content of the boiling diethylether soluble ingredient in the copolymer is within a range from 3 to 25% by weight.

## DESCRIPTION OF THE PREFERRED EMBODIMENT

The butene-1 copolymer according to the present invention contains ethylene units and butene-1 units. The crystallinity of the copolymer is mainly improved by the containment of the ethylene unit.

The copolymer according to the present invention contains the ethylene unit and the butene-1 unit at a molar ratio within a range from 1 : 99 to 15 : 85. If the molar ratio of the ethylene unit contained in the

copolymer is lower than the above specified range, the transparency of the molded film is lowered since the degree of crystallinity of the copolymer is not reduced. While on the other hand, if the molar ratio of the ethylene unit is higher than the above specified range, the copolymer becomes inhomogenous and sticky.

Particularly in the present invention, the above-specified molar ratio is preferably set within a range from 1 : 99 to 10 : 90. By specifying the ratio within the range, it is possible to obtain a copolymer capable of producing a molded film of more homogenous and higher transparency.

The intrinsic viscosity ($\eta$) of the butene-1 copolymer according to the present invention measured in a decalin solution at 135°C is within a range from 0.9 to 7.0 dl/g. The intrinsic viscosity ($\eta$) gives an effect mainly on the moldability and the mechanical property of the copolymer.

If the intrinsic viscosity ($\eta$) is lower than 0.9 dl/g, the mechanical strength of the molding product, particularly, the impact shock resistance produced by using the copolymer is reduced. On the other hand, if it is higher than 7.0 dl/g, the moldability is degraded.

The molecular weight distribution of the copolymer according to the present invention, that is, the ratio of (Mw/Mn) between the weight average molecular weight (Mw) and the number average molecular weight (Mn) of the copolymer is within a range from 4 to 15. The molecular weight distribution provides transparency to the resultant molding product, as well as gives an effect on the moldability and the mechanical strength of the molding product. In the butene-1 copolymer obtained by the conventional production process, the distribution width of the molecular weight tends to be narrow, production of molding product having sufficient moldability is difficult and when molded into film-like shape, the transparency of the film is often insufficient.

That is, those copolymers with the molecular weight distribution of not more than 4 has no sufficient moldability and, further, show insufficient transparency in the case of molding into a film-like shape. Furthermore, if the molecular weight distribution is broader, mechanical strength such as impact shock resistance is reduced.

Particularly, in the present invention, the molecular weight distribution is preferably within a range from 4 to 10. Those copolymers within the range have preferable moldability and transparency, as well as the show particularly, desirable mechanical property.

When the butene-1 copolymer according to the present invention is analyzed by using a differential thermal scanning analysis, two kinds of endo thermic curves showing lowest melting point and highest melting point can be obtained. Among them, the highest melting point is usually within a range from 70 to 110°C. In the present invention, the highest melting point is a peak appearing at the highest temperature side when the copolymer subjected to drying treatment is heated from 0 to 200°C at a temperature elevating rate of 10°C/min and endo thermic peak is measured, while the lowest melting point is a peak or a shoulder on the most lowest temperature side.

Then, in the copolymer according to the present invention, it is desirable that the difference between the highest melting point and the lowest melting point (temperature difference between the highest value and the lowest value of the melting point) measured by using a differential thermal scanning analysis is within a range from 2 to 40°C. The temperature difference particularly gives an effect on the fabricability and the temperature upon press-bonding film-like molding products in stack (heat seal temperature).

That is, if the temperature difference as described above is less than 2°C, the heat seal temperature goes higher to worsen the heat sealing property in the case of molding into a film. While on the other hand, if the temperature difference is greater than 40°C, the copolymer becomes sticky to reduce the molding performance. Particularly, if the highest melting point is lower than 70°C, stickiness may possibly occur in the copolymer even at the ambient temperature and it can not usually be used as the starting material for the molding product. Furthermore, if the highest melting point is higher than 110°C, the heat sealing temperature is too high to preferably conduct heat sealing.

Furthermore, the melting calorie of the copolymer according to the present invention measured by the differential thermal scanning analysis (defined by a straight line connecting the base lines of peaks or shoulders appearing in the difference thermal scanning analysis) is preferably within a range from 2 to 25 cal/g. If the melting heat calorie is lower than 2 cal/g, the copolymer may tend to be sticky. While on the other hand, if it is higher than 25 cal/g, the transparency of the film-like molding product may be lowered.

The block property (X) of ethylene unit in the main chain of the butene-1 copolymer according to the present invention can be measured along with the following equation by measuring the $^{13}C$-NMR of the butene-1 copolymer and identifying each of triad by utilizing the method as described in "Macromolecules", 15, 353 (1982) for the result of the measurement:

$\overline{X} = I/E$

where I represents a block polymerization ratio in the ethylene chain in the copolymer and it is usually represented by the. following equation:

$$I = \frac{I_{EEE}}{I_{BBE} + I_{EBE} + I_{BEB}}$$

and E is a content of an ethylene units in tghe copolymer usually represented by the general equation:

$$E(mol\%) = \frac{I_{EEE}/2+I_{EBE}+I_{EEB}}{I_{BBB}+I_{BBE}+I_{BEB}+I_{EEE}/2=I_{EBE}+I_{EEB}} \times 100$$

In the equations above, $I_{EEE}$ represents the mol number mol of the ethylene unit-ethylene unit-ethylene unit in the butene-1 copolymer and. in the some manner, $I_{BBE}$, $I_{EBE}$ and $I_{BEB}$, etc. also represent the kind of relevant units in the case where three monomer units in the copolymer are noted and regarded as one unit.

It is necessary that the block property (X) of ethylene. unit in the butene-1 copolymer according to the present invention is not greater than 0.015 and the lower value is better. Accordingly, most preferred value is 0. That is. when the three monomer units in the copolymer are noted, a copolymer of higher crystallinity can be obtained along with the increase of the unit in which all of three monomer units are ethylene units. Accordingly, if the block property (X) of ethylene unit is greater than 0.015, the transparency of the film-like molding product is reduced, for instance.

The boiling diethyl ether soluble content in the butene-1 copolymer according to the present invention has to be within a range from 3 to 25% by weight. Generally, solubility to the boiling diethyl ether tends to be lowered as the polymerization degree of the copolymer becomes higher and it tends to be reduced as the crystallinity is increased. The copolymer according to the present invention has a meaning of restricting the ingredient of low polymerization degree in the copolymer and the crystallinity by controlling the boiling diethyl ether soluble content within the range described above.

Accordingly, if the boiling diethyl ether soluble content is less than 3% by weight. the transparency of the film-like molding product is reduced. While on the other hand, if it exceeds 25% by weight, stickiness may occur since the content of the low polymerization ingredient is increased.

The butene-1 copolymer according to the present invention can be produced easily by reacting ethylene and butene-1 at a gas phase by using a specific solid catalyst ingredient containing magnesium represented by the general formula:

$MgR^{'}R^{2}$,

$Mg(OR^{'})_{m}X_{n}$

where $R^{'}$ and $R^{2}$ represent alkyl group, and m and n can satisfy the relationship: $0 \leqq m \leqq 2$ and n satisfies $0 \leqq n \leqq 2$ and X represents a halogen atom an organic aluminum compound and a specific electron donating compound.

Specifically, the copolymer according to the present invention can be produced by the production process as described in the specifications of Japanese Patent Application Nos. 61-144093, 61-196265. 61-196266 and 61-1867222 while referring to the characteristics of the copolymer as described above and by experimentally setting production conditions.

The process for producing the butene-1 copolymer according to the present invention is to be explained along with the method as described in the specification of Japanese Patent Application No. 61-196266. but the butene-1 copolymer according to the present invention is not restricted to the production process described above.

The copolymer according to the present invention can easily be produced by reacting butene-1 and ethylene under gas phase polymerization conditions at the presence of a catalyst comprising a solid catalyst ingredient (A) described later, an organic aluminum compound (B) and an electron donating compound (C).

The solid catalyst ingredient (A) is prepared by chlorinating at least one organic magnesium compound represented by the formula:

formula: $MgR^{'}R^{2}$

where $R^{'}$ and $R^{2}$ which may be identical or different with each other represent alkyl group with 1 to 20 carbon atoms. with at least one chlorinating agent to obtain a support and bringing the support in contact

with a titanium (IV) halide at a temperature within a range from -25 to +180 °C under the presence of an electron donor.

The organic magnesium compound can include those alkyl magnesium compounds such as diethyl magnesium, ethylbutyl magnesium, ethylhexyl magnesium, ethyloctyl magnesium, dibutyl magnesium, butylhexyl magnesium, butyloctyl magnesium and dicyclohexyl magnesium.

The chlorinating agent can include, chlorine gas and alkyl chloride. The combined use of chlorine gas and butyl chloride is preferred in the present invention.

Chlorination is usually carried out at 0 - 100 °C, preferably, from 20 to 60 °C, particularly preferably, from 20 to 40 C.

In the chlorination, a portion of alkyl groups bonded to magnesium atom is replaced with chlorine atoms. In addition, since at least a portion of alkyl groups is left, formation of normal cyrstal lattice is inhibited by the effect of the residual alkyl group to form not-layerous product with extremely small crystal grain size having an appropriate surface area and pore volume.

Not-layerous product thus obtained is subjected to treatment with titanium (IV) halide under the presence of an electron donor, if required, after the alcohol treatment. Processing of titanium (IV) halide is usually conducted at a temperature within a from -25 °C to +180 °C.

Titanium (IV) halide can include titanium tetrahalide, trihalogenated alkoxy titanium, dihalogenated alkoxy titanium and monohalogenated alkoxy titanium, titanium tetrachloride being particularly preferred for use.

As the electron donor, an organic compound containing oxygen, nitrogen, phosphorus or sulfur can be used.

Specific examples of the electron donor can include amines, amides, ketones, nitriles, phosphines, phosphoamides, esters, ethers, thioethers, thioesters. acid anhydrides, acid halides, acid amides, aldehydes and organic acids.

Among them, preferred are organic acids, esters, ethers, ketones and acid anhydrides. Examples of specific compounds can include benzoic acid, p-methoxy bonzoic acid, p-ethoxy benzoic acid, toluic acid, diisobutyl phthalate, benzoquinone, benzoic anhydride and ethylene glycol butyl ether.

The solid catalyst ingredient (A) thus prepared desirably has halogen/titanium ratio (molar ratio) from 3 to 200, preferably, from 4 to 100 and magnesium/titanium ratio (molar ratio) from I to 90, preferably, 5 to 70.

There is no particular restrictions for the organic aluminum compound (B) but trialkyl aluminum is particularly preferred.

As the electron donating compound (C) the heterocyclic compound represented by the following formula (2) can be used:

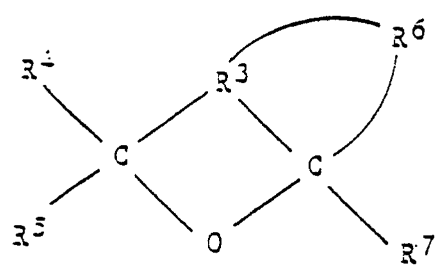

where $R^3$ and $R^6$ represent hydrocarbon group, preferably, substituted or not substituted saturated or not-saturated hydrocarbon with 2 to 5 carbon atoms. $R^4$, $R^5$ and $R^7$ represent hydrogen or hydrocarbon group, preferably, hydrogen or substituted or not-substituted saturated or not-saturated hydrocarbon group with 1 to 5 carbon atoms respectively.

The heterocyclic compound can include, for example, 1,4-cineole, 1,8-cineole, n-cineole, pinol, benzofuran, 2,3-dihydrobenzofuran (coumaran), 2H-chromene, 4H-chromeme, chroman, isochroman, dibenzofuran and xanthene. Each of these heterocyclic compounds may be used alone or two or more of them may be used together.

Among the various heterocyclic compounds described above, 1,8-cineole is particularly preferred.

The composition of the catalyst upon producing the butene-1 copolymer according to the present invention is such that the organic aluminum compound (B) is within a range usually from 0.1 to 1000 molar times, preferably. from 1 to 500 molar times to the titanium atom of the tetravalent titanium compound in the solid catalyst ingredient (A). Further, the electron donating compound (C) is used within such a range usually from 0.1 to 500 molar times. preferably, from 0.5 to 200 molar times based on the titanium atoms of

the tetravalent titanium compound in the solid catalyst ingredient (A).

The gas phase polymerization temperature is usually from 45 to 80 °C and, preferably, from 50 to 70 °C.

The polymerization pressure can properly be set within such a range as the liquefication of the starting material ingredient does not substantially occur and it is usually from 1 to 15 $kg/cm^2$.

Further, the molar ratio of introducing ethylene and butene-1 can properly be set within a range of the molar ratio between both of them in the copolymer to be obtained, that is, within a range from 1 : 99 to 15 : 85.

Furthermore, molecular weight controller such as hydrogen may be present together with an aim of adjusting the molecular weight. In addition, an inert gas having a boiling point lower than butene-1, for example, nitrogen, methane, ethane, propane may be present together with an aim of preventing the coagulation of the copolymer.

The butene-1 copolymer according to the present invention thus obtained can preferably be used as a material suitable to the film-like molding product or various kind of pipes.

Since the butene-1 copolymer according to the present invention has broader width of the molecular weight distribution as compared with the conventional buten-1 copolymer, it has satisfactory processability, that is, the molding pressure upon molding is within a preferable range, the appearance of the resultant molding product is extremely satisfactory and, particularly, the transparency of the film is excellent when it is molded into a film-like product.

Further, the temperature for carrying out heat sealing by using the film-like molding product is within a satisfactory range and, in addition, the heat sealing property is also preferred.

Furthermore, the butene-1 copolymer according to the present invention has satisfactory mechanical property and it is particulary excellent in the impact shock resistance.

The present invention is to be explained referring to examples and comparative examples.

Example 1

(1) Preparation of Solid Catalyst Ingredient (A)

300 ml of butyloctyl magnesium (in 20% heptane solution) was charged in a four-necked flask equipped with a mechanical stirrer, reflux condenser, dropping funnel, gas supply valve and thermometer, nitrogen was introduced into the flask and, while maintaining the inside of the flask to a inert atmosphere, 5 liter of butyl chloride was added at room temperature by using the dropping funnel. Then, chlorine gas was added for chlorination at a rate of 5 ml/min.

Then, 2.5 l of silicone oil was added at a temperature 25 to 35 °C, and 113 ml of ethanol was further dropped to the mixture. The resultant chlorides were precipitated by the addition of ethanol. The liquid mixture containing the precipitates were agitated at 40 °C for one hour and then the temperature was elevated to 75 - 80 °C and the solution was left over one night at that temperature.

The solution at high temperature was quietly added by using a siphon into a solution containing diisobutyl phthalate (electron donor) and an excess amount of $TiCl_4$ and cooled to -25 °C, to precipitate a reaction intermediate in low temperature $TiCl_4$. Then, the temperature of the mixed solution containing the precipitate was elevated to the room temperature.

Then, diisobutyl phthalate as the electron donor was further added to the mixed solution containing the precipitate, temperature was elevated to 100 - 110 °C and the mixed solution was maintained at that temperature for one hour. The reaction product was settled, washed with heptane at 85 °C for 5 - 6 times and the solution was transferred to another vessel by way of a siphon.

Further, an excess amount of $TiCl_4$ was added to the solution and the mixture was stirred at 110 °C for one hour. The resultant settling product and the solution were separated by siphon and, thereafter, the resultant catalyst ingredient (precipitate) was washed with heptane for several times (5 - 6 times at 80 °C).

The resultant precipitate was collected and dried under a slightly reduced pressure. In this way, a solid catalyst ingredient (A) with the Ti content of 3.0% by weight was obtained.

(2) Preparation of Catalyst

The solid catalyst ingredient (A) obtained in (1) above was charged into a catalyst preparation vessel

such that the titanium concentration in one liter was 2 mmol. 30 mmol/liter of triisobutyl aluminum and 12 mmol/liter of 1,8-cineole were charged to the catalyst preparation vessel. Then, propylene was charged in such an amount as 50 g per 1 mmol of titanium atoms and the temperature inside the catalyst preparation vessel was elevated to 40 °C to conduct the reaction for the preparation of the catalyst.

(3) Preparation of Butene-1 Copolymer

Using a fluidized bed polymerization vessel of 300 mm diameter and 100 liter volume, there were supplied a Ti catalyst slurry obtained by re-preparing the catalyst obtained in (2) above into 3.6 mmol/l converted as Ti atom from the catalyst preparation vessel to the polymerization reactor at a flow rate of 0.15 l/hr, triisobutyl aluminum at a flow rate of 30 mmol/hr and 1,8-cineole at a flow rate of 24 mmol/hr respectively to the polymerization reactor.

Polymerization was conducted at a reaction temperature of 60 °C while controlling the partial pressure of butene-1 to 3 kg/cm$^2$, the partial pressure of nitrogen to 4 kg/cm$^2$ and the partial pressure of hydrogen such that the intrinsic viscosity ($\eta$) of the resultant polymer had the value shown in Table 1 respectively and supplying butene-1, ethylene, hydrogen gas and nitrogen gas such that gas space velocity is at 35 cm/sec.

Examples 2 - 6 and Comparative Examples 1 and 6

Butene-1 copolymer was produced in the same manner as in Example 1 except for changing the introduction rate of butene-1 and ethylene.

Comparative Examples 2 - 3

(1) Preparation of the Solid Catalyst Ingredient

To a 500 ml volume three-necked flask made of glass (equipped with thermometer and stirrer) heated and dried, 75 ml of anhydrous heptane, 75 ml of titanium tetrabutoxide and 10 g of anhydrous magnesium chloride were completely dissolved. Then, the solution was cooled to 40 °C, to which 15 ml of methyl hydrogen polysiloxane was added to precipitate magnesium chloride-titanium tetrabutoxide complex. After washing the precipitate with purified heptane, 8.7 ml of silicon tetrachloride and 1.8 ml of diheptyl phthalate were added and maintained at 50 °C for 2 hours. Then, they were further washed with purified heptane to obtain a solid catalyst ingredient.

The titanium content in the resultant solid catalyst ingredient was 3.0% by weight and the diheptyl phthalate content was 25.0% by weight.

(2) Preparation of Butene-1 Copolymer

Into a 20 liter polymerization reactor, were continuously introduced 5 kg of butene-1 per one hour and ethylene in such an amount as giving ethylene unit amount shown in Table 1, 10 mmol of triethyl aluminum, 1 mmol of vinyltriethoxysilane and the solid catalyst obtained in (1) above in an amount of 0.05 mmol converted as titanium atom, and the partial pressures of the butene-1 and ethylene in the gas phase were adjusted such that the intrinsic viscosity of the resultant copolymer showed the value as described in Table 1. The reaction temperature was kept at 70 °C.

The polymerization solution was withdrawn continuously such that the liquid amount in the reactor was 10 liter and a small amount of ethanol was added to the withdrawn reaction product to stop the polymerizing reaction and, at the same time, not-reacted ingredients were removed to obtain butene-1 copolymer.

Comparative Examples 4 - 5

Into a 10 liter polymerization reactor, 5 kg of butene-1 per one hour and ethylene in such an amount as

giving the ethylen unit amount shown in Table 1, 20 mmol of dietyhyl aluminum and 10 mmol of titanium trichloride (manufactured by Toho Titanium Co., Ltd.) were continuously charged at this ratio. The partial pressure of hydrogen in the gas phase was kept at 2.7 $kg/cm^2$ and the partial pressure of butene-1 and ethylene in the gas phase were adjusted such that the intrinsic viscosity of the resultant copolymer showed the values as described in Table 1. The reaction temperature was kept at 70°C.

The polymerization solution was continuously withdrawn such that the liquid in the reaction vessel was 10 liter and methanol was added by 1 liter per hour to the withdrawn reaction product to stop the polymerizing reaction and then the unreacted ingredients were removed by water washing to obtain butene-1 copolymer.

## Measuring Method

Physical properties and characteristics of the resultant butene-1 copolymer were measured as described below.

### Intrinsic viscosity (η)

Intrinsic viscosity was measured in decalin at 135°C.

### Molecular weight distribution (Mw.Mn)

Showdex AD807 and AD80M/S were attached each by two to a gel permeation chromatography (GPC) device 150C manufactured by Waters Co. and molecular weight distribution was measured. The measuring temperature was at 135°C.

### Differential thermal scanning analysis

The resultant butene-1 copolymer was dried and used as the specimen.

The temperature of the specimen was elevated from 0 to 200°C at a temperature rising rate of 10°C min and the endo thermic peak was measured.

### Block property of ethylene

$^{13}$C NMR spectrum of the resultant butene-1 copolymer was measured and each of triad was identified by utilizing the method as described in the "Macromoleculars" previously cited for the result of the measurement and rhe property was determined by the following equation described previously:

X = I E

### Boiling diethyl ether soluble component

A specimen prepared by drying the resultant butene-1 copolymer, molding into a press sheet of 1 mm thickness and cut into 1 mm square was subjected to Soxhlet extraction with diethyl ether for 6 hours to determine the soluble content.

### Resin pressure

Using a T die cast molding machine having a screw of 20 mm diameter, the resin pressure was measured at a drawing rate of 7 m min to obtain a film of 20 µm thickness.

Haze

Measured according to ASTM D-1003.

Heat seal temperature

A film of 20 μm thickness was prepared from the resultant copolymer by using a T die cast molding machine with a screw diameter of 20 mm and at a drawing rate of 7 m/min.

A specimen of 15 mm width obtained by press-bonding the film with each other for one second by applying a load of 2 $kg/cm^2$ at a predetermined temperature in a heat sealer was subjected to peeling at a peeling rate of 20 mm/min and at a peeling angle of 180° and the heat seal temperature was defined as the temperature when the peeling resistance was 310.

Izod impact strength

The strength was measured according to JIS-K-7110. The measuring temperature was 0° C.

The obtained measuring results are shown in Table 1.

Table 1

| | Ethylene unit | Intrinsic viscosity (η) | Molecular weight distribution (Mw/Mn) | DSC max melting point | Temperature difference (Δt) | Melting calorie | Ethylene block property | Diethyl ether soluble content | Resin pressure | Haze | Heat seal temperature | Izod impact strength |
|---|---|---|---|---|---|---|---|---|---|---|---|---|
| | (mol%) | (dℓ/g) | | (°C) | (°C) | (caℓ/g) | | (weight%) | (kg/cm²) | (%) | (°C) | kg•cm/cm) |
| Example 1 | 1.6 | 1.95 | 5.6 | 94 | 19 | 9.7 | 0 | 10.4 | 90 | 12 | 105 | 67 |
| Example 2 | 4.3 | 1.85 | 5.8 | 86 | 25 | 7.6 | 0.003 | 15.1 | 80 | 10 | 99 | not broken |
| Example 3 | 8.6 | 2.14 | 5.6 | 81 | 29 | 5.5 | 0.009 | 23.5 | 100 | 6 | 95 | not broken |
| Example 4 | 1.5 | 1.14 | 6.0 | 92 | 21 | 9.5 | 0 | 15.6 | 60 | 11 | 106 | 51 |
| Example 5 | 1.1 | 1.86 | 5.9 | 99 | 9 | 10.3 | 0 | 8.3 | 80 | 13 | 108 | 62 |
| Comparative Example 1 | 0.5 | 1.86 | 5.6 | 109 | 0 | 11.2 | 0 | 6.5 | 85 | 16 | 115 | 60 |
| Comparative Example 2 | 4.5 | 2.02 | 3.2 | 90 | 0 | 7.4 | - | - | 130 | 16 | 110 | not broken |
| Comparative Example 3 | 8.0 | 2.13 | 3.0 | 84 | 0 | 5.3 | - | - | 140 | 12 | 105 | not broken |
| Comparative Example 4 | 4.0 | 1.94 | 5.2 | 85 | 0 | 7.2 | 0.014 | 24.2 | 110 | 24 | 120 | not broken |
| Comparative Example 5 | 8.3 | 1.84 | 5.0 | 79 | 0 | 4.8 | 0.021 | 37.8 | 100 | 20 | 110 | not broken |
| Comparative Example 6 | 1.4 | 0.70 | 5.7 | 95 | 13 | 9.9 | 0 | 9.6 | 40 | - | - | 3.0 |

## Claims

(1) A butane-1 copolymer containing ethylene units and butene-1 units within a molar ratio of from 1:99 to 15:85 in which the intrinsic viscosity for said copolymer is within a range of from 0.9 to 7.0 dl/g, the ratio of weight average molecular weight/number average molecular weight is within a range of from 4 to 15, the temperature difference between the highest value and the lowest value of the melting point of said copolymer measured by differential thermal scanning analysis is within a range of from 2 °C or higher, the ethylene block property of said copolymer measured by NMR spectroscopy is not more than 0.015, and the content of the boiling diethyl ether soluble ingredient in said copolymer is within a range of from 3 to 25% by weight.

(2) The butene-1 copolymer as defined in claim 1, wherein the highest value for the melting point of the butene-1 copolymer measured by the differential thermal scanning analysis is within a range of from 70 to 110 °C.

(3) The butene-1 copolymer as defined in claim 1, wherein the temperature difference between the highest value and the lowest value for the melting point of the butene-1 copolymer measured by the differential thermal scanning analysis is within a range of from 2 to 40 °C.

(4) The butene-1 copolymer as defined in claim 1, wherein the melting calorie of the butene-1 copolymer measure by differential thermal scanning analysis is within a range of from 2 to 25 cal/g.

(5) The butene-1 copolymer as defined in claim 1, which contains the ethylene unit and the butene-1 unit within a molar ratio of from 1:99 to 10:90.

(6) The butene-1 copolymer as defined in claim 1, in which the butene-1 copolymer is obtained by polymerizing butene-1 and ethylene under gas phase polymerizing conditions in the presence of a catalyst comprising a solid catalyst ingredient (A) containing magnesium represented by the general formulae:

$MgR^1R^2$

$Mg(OR^1)_mX_n$

wherein $R^1$ and $R^2$ represent alkyl groups, m and n satisfy the relationships: $0 \leqq m \leqq 2$ and $0 \leqq n \leqq 2$ and X represents a halogen atom, an organic aluminum compound (B) and an electron donating compound (C).

(7) The butene-1 copolymer as defined in claim 6, wherein the solid catalyst ingredient (A) is prepared by chlorinating at least one of organic magnesium compounds represented by the formula:

$MgR^1R^2$

wherein $R^1$ and $R^2$ which may be identical or different with each other represent alkyl groups having 1 to 20 carbon atoms, with at least one chlorinating agent to obtain a support and then bringing said support into contact with a tetravalent titanium halide in the presence of an electron donor at a temperature in the range of from -25 °C to +180 °C.

(8) The butene-1 copolymer as defined in claim 6, wherein the organic aluminum compound (B) is trialkyl aluminum.

(9) The butene-1 copolymer as defined in claim a6, wherein the electron donor (C) is a heterocyclic compound represented by the following formula:

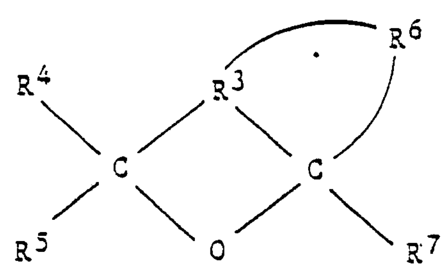

wherein $R^3$ and $R^6$ represent hydrocarbon groups, preferably, substituted or non-substituted, saturated or non-saturated hydrocarbon groups having 2 to 5 carbon atoms and $R^4$, $R^5$ and $R^7$ represent hydrogen or hydrocarbon groups, preferably, hydrogen or substituted or non-substituted, saturated or non-saturated hydrocarbon groups having 1 to 5 carbon atoms.

(10) The butene-1 copolymer as defined in claim 6, wherein the electron donating compound is 1,8-cineole.

European Patent Office

# EUROPEAN SEARCH REPORT

Application Number

EP 88 11 2456

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 257 131 (IDEMITSU)<br>* Claims; page 8, lines 25-27 * | 1-10 | C 08 F 210/08<br>C 08 F 4/64 |
| A | EP-A-0 249 984 (IDEMITSU)<br>* Claims; page 9, lines 26-28 * | 1-10 | |
| A | EP-A-0 184 903 (MITSUI)<br>* Claims * | 1 | |
| | | | **TECHNICAL FIELDS SEARCHED (Int. Cl.4)** |
| | | | C 08 F |

The present search report has been drawn up for all claims

| Place of search | Date of completion of the search | Examiner |
|---|---|---|
| THE HAGUE | 20-03-1989 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)